# FASCICULE DE BREVET EUROPEEN

(11) **EP 1 808 353 B1**
(45) Date de publication et mention de la délivrance du brevet: **10.08.2011**
(21) Numéro de dépôt: 07107053.6
(22) Date de dépôt: 16.04.2003
(51) Int. Cl.: B62B 7/08

(54) **Procédé de fabrication d'une voiture d'enfant à châssis à éléments coulissants, voiture d'enfant et châssis correspondants**
Herstellungsverfahren für einen Kinderwagen mit Gestell mit entsprechenden Schiebeelementen, Kinderwagen und Gestell
Method of manufacturing a pram having a frame with sliding elements, corresponding pram and frame

(30) Priorité: 16.04.2002 FR 0204962; 26.11.2002 FR 0214832
(43) Date de publication de la demande: 18.07.2007
(62) Demande divisionnaire de: 06115414.2
(73) Titulaire: Dorel France SA, 49309 Cholet Cedex (FR)
(72) Inventeur: Zweideck, Bruno, 49300, Cholet (FR)
(74) Mandataire: Bioret, Ludovic

(56) Documents cités:
- GB-A- 2 204 282
- US-A- 4 412 689
- US-A- 5 553 885
- US-A- 5 769 447
- US-A- 5 938 230

## Description

Le domaine de l'invention est celui de la puériculture. Plus précisément, l'invention concerne les voitures d'enfant, et notamment les mécanismes de pliage pour de telles voitures d'enfants. Le document US 4,412,689 divulgue les caractéristiques du préambule de la revendication 1.

On connaît déjà de très nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations le plus facilement possible ;
- solidité et sécurité de l'enfant transporté ;
- simplicité et faible coût de la fabrication.

Parmi les différents types de châssis connus, il existe une catégorie dite à pliage cassé. Selon cette technique, les bras poussoirs se trouvent, en position dépliée, sensiblement dans le prolongement des piétements avant, et basculent par rapport à ces derniers lors du pliage. Le plus souvent, le basculement des bras poussoirs se fait vers le bas, l'extrémité supérieure des bras poussoirs se rapprochant des roues arrière.

On connaît également des techniques selon lesquelles les bras poussoirs basculent vers le haut, de façon que l'extrémité supérieure du bras poussoir se rapproche des roues avant. Une telle technique a notamment été développée par le titulaire de la présente de demande de brevet pour les poussettes dites "tout terrain", qui sont munies de roues de grande taille (par rapport aux poussettes classiques), équipées le plus souvent de pneus gonflables.

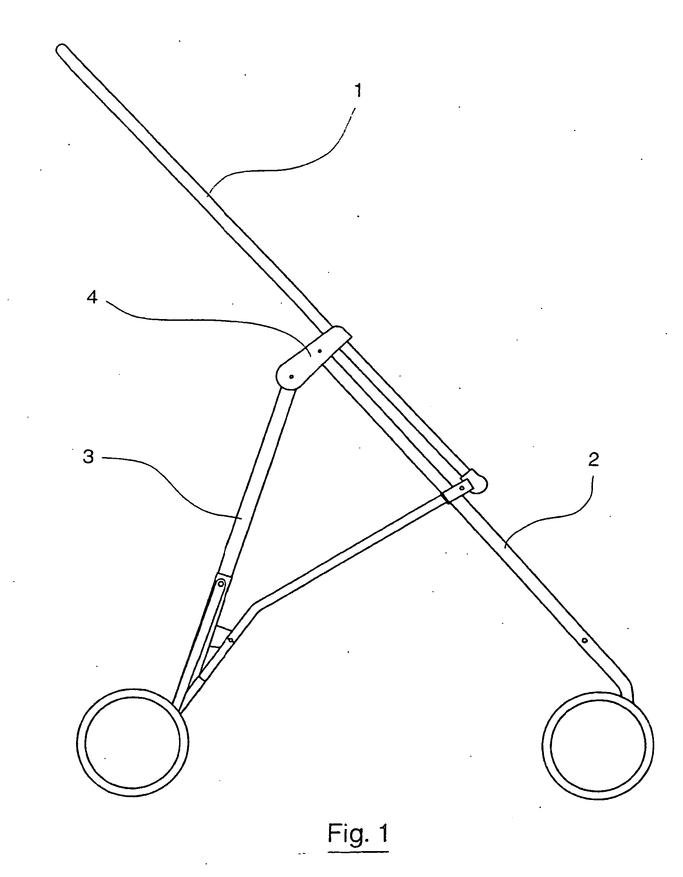

Une autre technique connue est illustrée par la figure 1. Selon cette technique, chaque bras poussoir 1 peut coulisser parallèlement au brancard avant 2 entre une position déployée où le bras poussoir prolonge sensiblement le brancard avant et une position repliée où le bras poussoir et le brancard avant correspondant sont disposés côte à côte. Chaque brancard arrière 3 est articulé au voisinage de son extrémité supérieure sur le brancard avant correspondant.

Ces différentes techniques ont généralement un point commun résidant dans le coulissement des bras poussoirs par rapport aux brancards avant. Ces différents éléments sont réalisés sous la forme de tubes métalliques, et le coulissement repose sur un principe constant, consistant à mettre en oeuvre une pièce de liaison 4 montée fixe sur le brancard avant et présentant une coulisse, espacée du point de fixation du brancard avant, dans laquelle le bras poussoir peut coulisser parallèlement au brancard avant en étant écarté de celui-ci.

La mise en oeuvre de cet ensemble mécanique a permis de proposer plusieurs techniques de pliage utilisant un tel coulissement, notamment les techniques rappelées précédemment.

Toutefois, ce principe de conception entraîne plusieurs inconvénients.

En effet, le bras poussoir n'est guidé que dans une portion de la pièce de liaison de longueur relativement faible. Avec l'usure des pièces et l'apparition progressive de jeux de plus en plus important entre elles, le coulissement est sujet à des phénomènes de porte-à-faux qui font que le pliage et/ou le dépliage deviennent pénibles à exécuter pour l'utilisateur.

En outre, les pièces de liaison et les bras poussoirs sont sujets à un encrassement, plus ou moins conséquent suivant les chemins empruntés par la voiture d'enfant, qui peut conduire à des phénomènes de blocage du coulissement lors du pliage ou du dépliage.

Par ailleurs, lors des manoeuvres de pliage et de dépliage de la voiture, l'utilisateur ou l'enfant transporté peut par mégarde glisser les doigts dans l'espace entre le bras poussoir et le brancard avant, au risque de subir un pincement avec des conséquences plus ou moins graves.

L'invention a notamment pour objectif de pallier ces différents inconvénients de l'art antérieur.

Plus précisément, l'invention a pour objectif de proposer une technique de fabrication de voiture d'enfant qui soit simple et efficace, et permettant d'obtenir un châssis mettant en oeuvre un ensemble mécanique pour le pliage qui soit plus fiable que les solutions de l'art antérieur.

En ce sens, l'invention a pour objectif de fournir un procédé de fabrication d'une voiture d'enfant dans laquelle le coulissement est amélioré, en termes d'efficacité et de fiabilité, et qui n'est donc pas ou peu sujet aux effets d'un usage intensif (usure, apparition de jeux,...).

L'invention a aussi pour objectif de fournir un tel procédé, selon lequel l'ensemble mécanique de coulissement ne subit pas, ou peu, les effets d'un encrassement.

Un autre objectif de l'invention est de fournir un tel procédé, grâce auquel on réduit notablement les risques de pincement de doigts ou d'autres désagréments de ce type.

L'invention a également pour objectif de fournir une telle poussette, dont les moyens techniques de pliage permettent de développer de nouveaux designs, de nouvelles présentations.

Ces objectifs, ainsi que d'autres qui apparaîtront par la suite, sont atteints à l'aide d'un procédé selon la revendication 1.

Les revendications 2 à 8 précisent différents aspects préférentiels de l'invention.

On note que l'invention peut s'appliquer tant aux voitures d'enfant du type à quatre roues (comprenant un brancard avant de chaque côté de la voiture) qu'aux voitures d'enfant du type à trois roues (comprenant un unique brancard avant).

Selon une solution avantageuse, ledit brancard arrière est articulé par rapport audit brancard avant, et présente une surface de contact avec ledit brancard avant définie de façon à venir s'inscrire dans une surface complémentaire définie dans ledit brancard avant.

Les différents éléments composant le châssis forment, dans la position repliée de la voiture d'enfant, un ensemble compact et rigide particulièrement appréciable pour être déplacé et/ou soulevé en vue par exemple de son chargement dans le coffre d'un véhicule.

Selon un mode de réalisation, au moins une pièce réalisée en un matériau à faible coefficient de frottement est clippée sur ledit rail et/ou sur ledit coulisseau.

On améliore ainsi de façon notable la capacité des pièces à coulisser l'une contre l'autre.

Avantageusement, ladite pièce réalisée en un matériau à faible coefficient de frottement est un patin et/ou un fil, et comprend préférentiellement au moins un fil chromé ou zingué.

Préférentiellement, ledit poussoir, ledit brancard avant et/ou ledit brancard arrière sont réalisés à partir d'éléments profilés. Dans ce cas, lesdits éléments profilés sont réalisés dans un des matériaux appartenant au groupe comprenant :
- l'aluminium ;
- l'aluminium anodisé ;
- l'aluminium céramisé ;
- les matériaux composites ;
- les matériaux extrudés ;
- les matériaux pultrudés ;
- le PTFE ;
- le PE ;
- le silicone ;
- le bois.

De façon avantageuse, les profilés sont réalisés dans des matériaux métalliques extrudés, et en particulier en aluminium qui regroupe de nombreux avantages, et notamment :
- sa densité, qui permet d'obtenir des pièces légères ;
- son rapport qualité/prix ;
- son état de surface qui ne nécessite pas obligatoirement de traitement complémentaire ;
- son aptitude à être travaillé à l'aide de techniques simples et courantes (rivetage, soudage...) comparé à d'autres matériaux tels que par exemple les composites.

Avantageusement, l'intérieur d'au moins un desdits éléments profilés est adapté pour recevoir au moins un équipement spécifique.

On obtient ainsi la possibilité d'introduire, en les masquant, des éléments ou des mécanismes à l'intérieur des profilés, tels que par exemple, des chemins de câble.

L'invention concerne également une poussette et un châssis pliant pour voiture d'enfant obtenus par le procédé décrit précédemment.

D'autres caractéristiques et avantages de l'invention apparaîtront plus clairement à la lecture de la description suivante d'un mode de réalisation donné à titre d'exemple illustratif et non limitatif et des dessins parmi lesquels :
- la figure 1, déjà commentée en préambule, illustre une voiture d'enfant selon l'art antérieur ;
- les figures 2A et 2B représentent une voiture d'enfant selon l'invention, respectivement en position dépliée et en position repliée ;
- les figures 3 et 4 sont des vues en coupe, respectivement de dessus et en perspective, d'un ensemble jointif formé par le brancard avant, le brancard arrière et le bras poussoir de la voiture d'enfant des figures 2A et 2B ;
- la figure 5 est une vue en coupe d'un deuxième mode de réalisation des moyens favorisant le coulissement du bras poussoir par rapport au brancard avant.

En référence à la figure 1, on rappelle que les voitures d'enfant comprenant un châssis pliant comprennent de façon classique et quasi constante, selon l'art antérieur, un mécanisme de coulissement du bras poussoir 1, par rapport au brancard 2 selon lequel le bras poussoir coulisse parallèlement au brancard avant et à distance de celui-ci, en étant guidé par une pièce de liaison 4.

L'invention propose une approche fondamentalement nouvelle et non évidente, par rapport à cet art antérieur. Comme détaillé ci-après, l'invention repose notamment sur l'obtention des poussoirs et/ou de brancards sous la forme d'éléments profilés, par exemple en aluminium, la section des profilés étant conformés pour définir un coulisseau ou un rail.

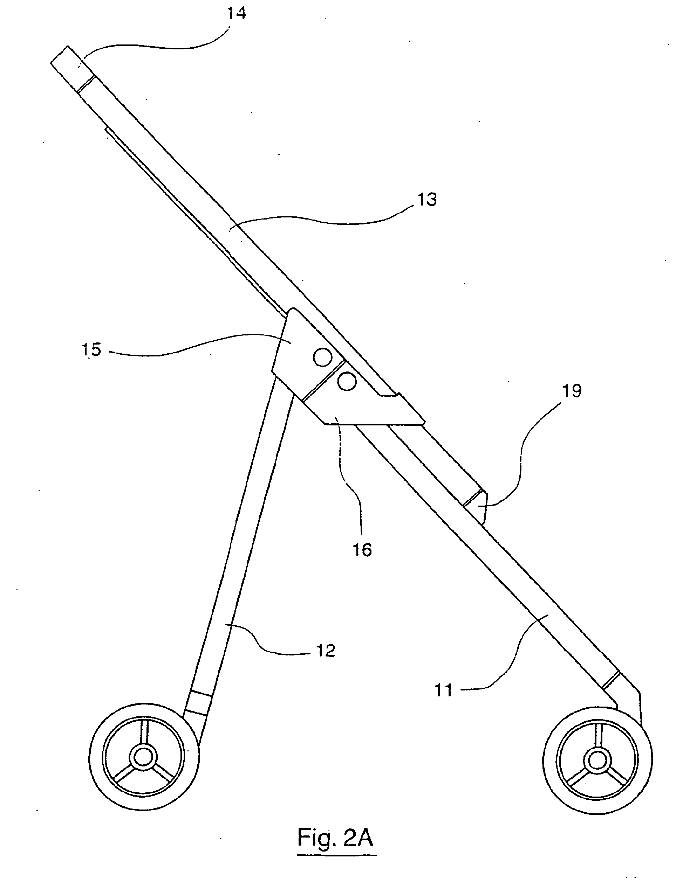

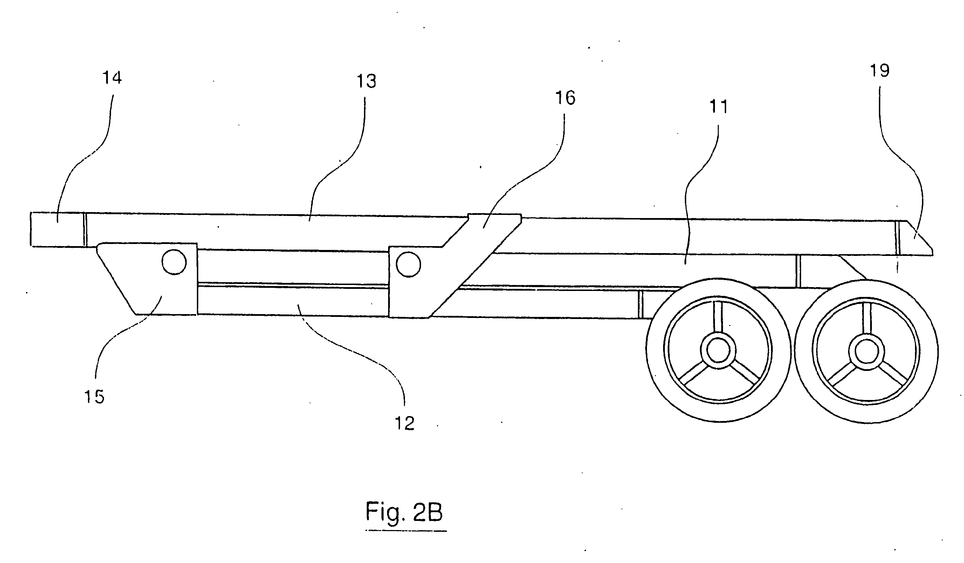

Tel qu'illustré par les figures 2A et 2B, une voiture d'enfant à châssis pliant obtenu selon ce procédé comprend, de chaque côté de la voiture, un brancard avant 11 portant au moins une roue avant, un brancard arrière 12 portant une ou deux roues (ou plus) arrière, et un poussoir 13 coopérant avec une poignée de guidage 14.

On peut noter, sur ces figures, que la solution de l'invention permet de réaliser une présentation tout à fait originale, esthétique et ergonomique, limitant en outre les risques de pincement.

Selon l'invention, le poussoir 13 et le brancard avant 11 sont en effet solidarisés l'un à l'autre et forment un assemblage de deux pièces coulissant l'une par rapport à l'autre, sans espace entre elles.

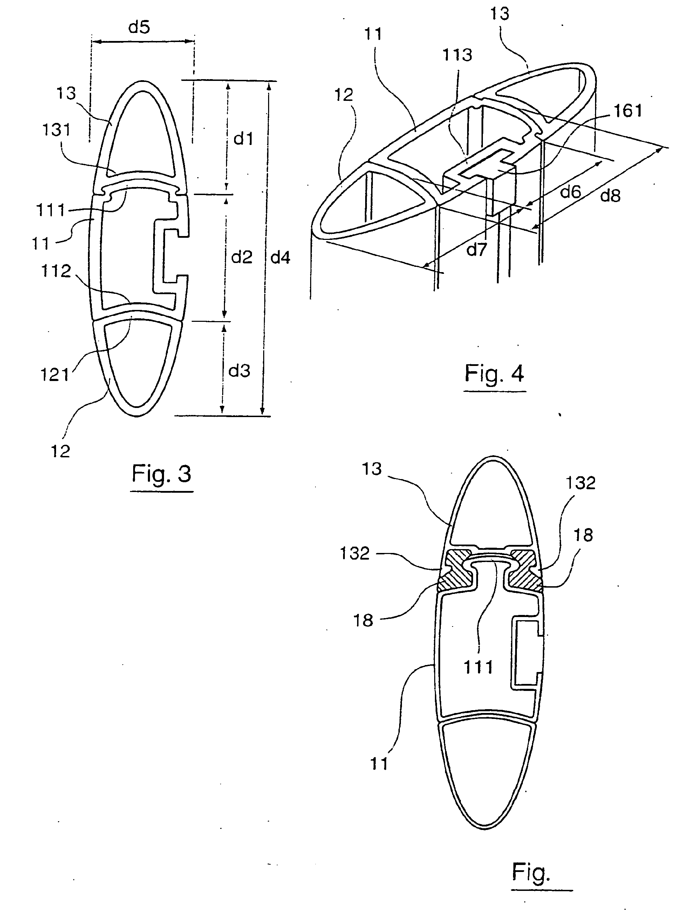

Pour ce faire, tel que cela apparaît plus clairement sur les figures 3 et 4, le poussoir 13 présente un rail 131 tandis que le brancard avant 11 présente un coulisseau 111 conformé pour coulisser dans le rail 131.On note que, selon un autre mode de réalisation envisageable, le rail pourrait être porté par le brancard avant tandis que le coulisseau serait dans ce cas porté par le poussoir. En outre, il est également concevable d'envisager sans sortir du cadre de l'invention, plusieurs rails et/ou coulisseaux sur chacune des pièces, ou tout autre combinaison permettant le coulissement sans espace entre les pièces.

Selon le mode de réalisation présenté, le brancard avant 11, le brancard 12 arrière et le poussoir 13 sont réalisés à partir d'éléments profilés en aluminium. Ces éléments profilés pourront, dans d'autres modes de réalisation, être réalisés en aluminium anodisé ou céramisé, en matériaux composites, en PTFE ou en PE, en bois, les profilés pouvant être conformés par différentes techniques, telles que des procédés d'extrusion ou de pultrusion pour les matériaux qui s'y prêtent.

Par ailleurs, le brancard arrière 12 est articulé par rapport au brancard avant 11, à l'aide d'une pièce de liaison 15 (figures 2A et 2B), par exemple en matière plastique.

Ainsi, la voiture d'enfant selon l'invention peut être dépliée (figure 2A), et pliée (figure 2B).

Dans le mode de réalisation illustré, une pièce de liaison complémentaire 16 dont une portion 161 (figure 4) pénètre un évidement 113 de forme complémentaire prévu dans le brancard avant 11. Cette pièce de liaison complémentaire 16 est montée sur le brancard avant 11 de telle sorte qu'elle vienne en butée contre la pièce de liaison 15 lorsque la voiture d'enfant est dépliée. La pièce 16 peut être réalisée dans le même matériau que la pièce 15, pour donner une même impression d'ensemble, notamment en position dépliée.

On note toutefois que le guidage en coulissement du brancard avant et du poussoir, ainsi que le maintien de ceux-ci dans leur position respective, n'est pas assurée par cette pièce 16, mais du seul fait de la forme (rail/coulisseau) qui leur est donnée selon l'invention. Par conséquent, la pièce 16 peut ne pas apparaître dans d'autres modes de réalisation.

Dans la position pliée de la voiture d'enfant, le poussoir 13, le brancard avant 11 et le brancard arrière 12 forment un ensemble jointif qui présente une section homogène et compacte, de forme elliptique selon le présent mode de réalisation. Bien sûr, d'autres sections peuvent être envisagées, et cette section peut varier.

Cet ensemble jointif est obtenu, lorsque la voiture est pliée, grâce notamment au fait que le brancard arrière 12 présente une surface de contact 121 définie de façon à venir s'inscrire dans une surface complémentaire 112 du brancard avant 11.

L'ensemble jointif est par ailleurs, et de façon complémentaire, formé par le poussoir 13 et le brancard avant 11 monté à coulissement l'un dans l'autre.

A titre indicatif, un tel ensemble jointif, et les pièces qui le composent présentent, dans le mode de réalisation illustré en figure, les dimensions suivantes :
- d₁=37mm;
- d₂ = 36 mm ;
- d₃=32mm;
- d₄ = 105 mm ;
- d₅ = 32 mm;
- d₆ = 36 mm;
- d₇ = 37 mm;
- d₈ = 43 mm.

Toujours à titre indicatif, les longueurs du poussoir, du brancard avant et du brancard arrière sont ici respectivement de 970 mm, 700 mm et 550 mm.

On note que la forme des surfaces complémentaires 112 et 121 est incurvée selon le présent mode de réalisation, mais pourrait présenter une autre forme (carrée, trapézoïdale...) selon d'autres modes de réalisation envisageables.

En outre, la section elliptique de l'ensemble jointif est une forme avantageuse, ergonomiquement et esthétiquement, permise par le principe de l'invention. De nombreuses autres sections peuvent bien sûr être envisagées, en fonction des exigences techniques ou esthétiques.

Selon un mode de réalisation illustré par la figure 6, le coulissement est assuré par l'intermédiaire de patins 18 en téflon (ou alternativement en plastique, en polymère, en polyoléfine ou tout autre matériau ayant un faible coefficient de frottement).

Ces patins 18 sont conformés pour être retenus sur le poussoir 13 par des moyens de clippage 132 tandis qu'ils épousent partiellement la forme du coulisseau 111 du brancard avant 11. On note que les patins peuvent être simplement enfilés sur le poussoir.

On notera que l'extrémité inférieure 19 joue également le rôle de pied, en position pliée et dressée (figure 2B).

L'invention ne se limite bien sûr pas au mode de réalisation décrit ci-dessus, mais concerne au contraire toutes les voitures d'enfant mettant en oeuvre de tels moyens de coulissement.

Ainsi, le châssis peut être construit selon diverses approches connues, et la cinématique de pliage/dépliage peut être adaptée en conséquence. Par exemple, la voiture peut être équipée de trois roues, dont une roue avant centrale.

## Revendications

1. Procédé de fabrication d'une voiture d'enfant à châssis pliant comprenant :
- deux brancards avant (11), portant au moins une roue avant,
- deux brancards arrière (12), portant au moins une roue arrière, et
- deux poussoirs (13), coopérant avec une poignée de guidage (14),
**caractérisé en ce que** chacun desdits poussoirs (13) est réalisé sous la forme d'un élément profilé présentant un coulisseau ou un rail,
et **en ce que** chacun desdits poussoirs est assemblé avec un desdits brancards avant, à l'aide d'au moins un rail ou d'au moins un coulisseau porté par ledit brancard avant, lesdits rails et coulisseaux présentant des formes respectives assurant qu'ils soient maintenus l'un par rapport à l'autre et puissent coulisser l'un par rapport à l'autre, sans espace apparent entre eux, pour permettre le pliage et le dépliage de ladite voiture d'enfant, le rail étant conformé pour épouser partiellement la forme du coulisseau.

2. Procédé selon la revendication 1, **caractérisé en ce que** lesdits éléments profilés sont réalisés dans un des matériaux appartenant au groupe comprenant :
- l'aluminium ;
- l'aluminium anodisé ;
- l'aluminium céramisé ;
- les matériaux composites ;
- les matériaux extrudés ;
- les matériaux pultrudés ;
- le PIFE
- le PE ;
- le silicone.

3. Procédé selon l'une quelconque des revendications 1 et 2, **caractérisé en ce que** l'intérieur d'au moins un desdits éléments profilés est adapté pour recevoir au moins un équipement spécifique.

4. Procédé selon la revendication 3, **caractérisé en ce qu'**au moins un desdits équipements spécifiques est un câble.

5. Procédé selon l'une quelconque des revendications 1 à 4, **caractérisé en ce qu'**un brancard arrière est monté articulé sur une partie supérieure d'au moins un desdits brancards avant, à l'aide d'une pièce de liaison (15).

6. Procédé selon la revendication 5, **caractérisé en ce que** ladite pièce de liaison (15) est en matière plastique.

7. Procédé selon l'une quelconque des revendications 1 à 6, **caractérisé en ce que** chacun desdits brancards (11) avant porte au moins une pièce (18) réalisée en un matériau à faible coefficient de frottement.

8. Procédé selon la revendication 7, **caractérisé en ce que** la ou lesdites pièces sont des patins (18) portés par les brancard avant et épousant partiellement la forme dudit coulisseau (111).

9. Châssis pliant pour voiture d'enfant, fabriqué selon le procédé de l'une quelconque des revendications 1 à 8.

10. Voiture d'enfant fabriquée selon le procédé de l'une quelconque des revendications 1 à 8.

## Claims

1. A method for manufacturing a children's vehicle with a folding frame, said folding frame comprising:
- two front shafts (11), bearing at least one front wheel,
- two rear shafts (12) bearing at least one rear wheel, and
- two pushing elements (13) cooperating with a guide handle (14),
**characterised in that** each of said pushing elements (13) is made from a profiled element having a slide or a rail,
and **in that** each of said pushing elements is assembled with one of said front shafts, using at least one rail or at least one slide borne by said front shaft, said rails and slides having respective forms ensuring that they are retained one in relation to the another and that they can slide one in relation to the other, without any apparent space between them, in order to allow for the folding and the unfolding of said children's vehicle, with the rail being shaped to partially hug the shape of the slide.

2. Method according to claim 1, **characterised in that** said profiled elements are made from one of the materials belonging to the group comprising:
- aluminium;
- anodised aluminium;
- ceramised aluminium;
- composite materials;
- extruded materials;
- pultruded materials;
- PTFE;
- PE;
- silicone.

3. Method according to any one of claims 1 and 2, **characterised in that** the inside of at least one of said profiled elements is designed to receive at least one specific piece of equipment.

4. Method according to claim 3, **characterised in that** at least one of said specific pieces of equipment is a cable.

5. Method according to any one of claims 1 to 4, **characterised in that** a rear shaft is mounted articulated on an upper portion of at least one of said front shafts, using a connecting part (15).

6. Method according to claim 5, **characterised in that** said connecting part (15) is made of plastic.

7. Method according to any one of claims 1 to 6, **characterised in that** each one of said shafts (11) bears at least one part (18) made from a material having a low coefficient of friction.

8. Method according to claim 7, **characterised in that** said part or parts are runners (18) borne by the front shafts and partially hugging the shape of said slide (111).

9. Folding frame for children's vehicle, manufactured according to the method of any one of claims 1 to 8.

10. Children's vehicle, manufactured according to the method of any one of claims 1 to 8.

## Patentansprüche

1. Herstellungsverfahren für einen Kinderwagen mit zusammenklappbarem Rahmen, umfassend:
- zwei vordere Verstrebungen (11), die mindestens ein Vorderrad tragen,
- zwei hintere Verstrebungen (12), die mindestens ein Hinterrad tragen, und
- zwei Schiebearme (13) , die mit einem Führungsgriff (14) zusammenwirken,
**dadurch gekennzeichnet, dass** jeder der Schiebearme (13) als Profilelement ausgeführt ist, das eine Schiene oder eine Schlitten aufweist,
und dass jeder der Schiebearme mit einer der vorderen Verstrebungen zusammengebaut ist, und zwar anhand mindestens eines Schlittens oder mindestens einer Schiene, der bzw. die von den vorderen Verstrebungen getragen wird, wobei die Schlitten und Schienen jeweilige Formen aufweisen, die sicherstellen, dass sie sich gegenseitig halten und im Verhältnis zueinander gleiten können, ohne sichtbaren Zwischenraum dazwischen, um das Zusammenklappen und Aufklappen des Kinderwagens zu ermöglichen, wobei der Schlitten ausgestaltet ist, um sich teilweise der Form der Schiene anzupassen.

2. Verfahren nach Anspruch 1, **dadurch gekennzeichnet, dass** die Profilelemente aus einem der Materialien hergestellt sind, die zu der Gruppe gehören, die Folgendes umfasst:
- Aluminium,
- eloxiertes Aluminium,
- keramisches Aluminium,
- Verbundmaterialien,
- extrudierte Materialien,
- pultrudierte Materialien,
- PTFE,
- PE,
- Silikon.

3. Verfahren nach einem der Ansprüche 1 und 2, **dadurch gekennzeichnet, dass** das Innere von mindestens einem der Profilelemente dazu geeignet ist, um mindestens eine spezifische Einrichtung aufzunehmen.

4. Verfahren nach Anspruch 3, **dadurch gekennzeichnet, dass** zumindest eine der spezifischen Einrichtungen ein Kabel ist.

5. Verfahren nach einem der Ansprüche 1 bis 4, **dadurch gekennzeichnet, dass** eine hintere Verstrebung auf einem oberen Bereich mindestens einer der vorderen Verstrebungen anhand eines Verbindungsteils (15) gelenkig gelagert ist.

6. Verfahren nach Anspruch 5, **dadurch gekennzeichnet, dass** das Verbindungsteil (15) aus Kunststoff besteht.

7. Verfahren nach einem der Ansprüche 1 bis 6, **dadurch gekennzeichnet, dass** jede der Verstrebungen (11) mindestens ein Teil (18) trägt, das aus einem Material mit niedrigem Reibungskoeffizienten hergestellt ist.

8. Verfahren nach Anspruch 7, **dadurch gekennzeichnet, dass** das oder die Teile Kufen (18) sind, die von den vorderen Verstrebungen getragen werden und teilweise der Form der Schiene (111) folgen.

9. Zusammenklappbarer Rahmen für Kinderwagen, hergestellt gemäß dem Verfahren nach einem der Ansprüche 1 bis 8.

10. Kinderwagen, hergestellt gemäß dem Verfahren nach einem der Ansprüche 1 bis 8.
